# EUROPÄISCHE PATENTSCHRIFT

(11) **EP 2 426 376 B1**
(45) Veröffentlichungstag und Bekanntmachung des Hinweises auf die Patenterteilung: **04.06.2014**
(21) Anmeldenummer: 11178874.1
(22) Anmeldetag: 25.08.2011
(51) Int. Cl.: F16H 47/02, B60K 6/442, B60K 6/52, B60K 6/547, B60K 23/08

(54) **Fahrantrieb mit einem Antriebsmotor und einer Getriebeeinrichtung mit Schaltgetriebe und Variator**
Traction drive with a drive engine and a geared device with switchable gearbox and variator
Système d'entraînement doté d'un moteur et d'un dispositif d'engrenage à boîte de vitesse et variateur

(30) Priorität: 02.09.2010 DE 102010036142
(43) Veröffentlichungstag der Anmeldung: 07.03.2012
(73) Patentinhaber: Linde Hydraulics GmbH & Co. KG, 63743 Aschaffenburg (DE)
(72) Erfinder: Welschof, Bernward, Dr., 63762 Großostheim (DE); Krittian, Lukas, 63739 Aschaffenburg (DE)
(74) Vertreter: Geirhos, Johann

(56) Entgegenhaltungen:
- DE-A1-102006 036 846
- JP-A- 11 030 305
- US-A1- 2009 124 456
- US-A1- 2010 120 580

## Beschreibung

Die Erfindung betrifft einen Fahrantrieb mit einem Antriebsmotor, einer Getriebeeinrichtung, die ein Schaltgetriebe mit einer Mehrzahl von Schaltstufen mit jeweils festem Übersetzungsverhältnis und einen Variator mit stufenlos variablem Übersetzungsverhältnis umfasst, und zwei durch die Getriebeeinrichtung antreibbaren Antriebsachsen, wobei der Variator und eine zwischen dem Antriebsmotor und dem Variator angeordnete, lösbare Kupplung einer ersten Schaltstufe des Schaltgetriebes vorgeschaltet sind und eine zweite Schaltstufe des Schaltgetriebes eingangsseitig direkt oder unter Zwischenschaltung mindestens einer weiteren Übersetzungsstufe mit dem Antriebsmotor verbunden ist.

Fahrantriebe sollen u. a. im Hinblick auf die Einhaltung zukünftig strengerer Abgasnormen einen guten Wirkungsgrad aufweisen. Aus diesem Grund werden die in den Fahrantrieben verwendeten Getriebeeinrichtungen häufig als Leistungsverzweigungsgetriebe ausgebildet, bei denen die Vorteile von Stufenlosgetrieben mit den Vorteilen von Stufengetrieben vereint werden. Ein solches Leistungsverzweigungsgetriebe ist in der EP 1 626 206 A2 beschrieben.

Durch das Vorhandensein eines Variator-Getriebezweigs kann die Fahrgeschwindigkeit ohne Zugkraftunterbrechung verändert werden. Dabei ist es möglich, die Drehzahl des Antriebsmotors von der Fahrgeschwindigkeit zu entkoppeln, wodurch der Antriebsmotor ohne Einfluss durch die Fahrgeschwindigkeit zusätzliche Aggregate (z.B. eine Arbeitshydraulikpumpe) antreiben kann. Ferner lässt sich auf einfache Weise ein Kriechgang realisieren. Durch das Vorhandensein des mit festen Schaltstufen versehenen Getriebezweigs wird ein Teil der in das Leistungsverzweigungsgetriebe eingespeisten Leistung nicht mit dem mäßigen Wirkungsgrad des Variators konfrontiert, sondern unterliegt nur den relativ geringen Verlusten im Stufengetriebe, das einen besseren Wirkungsgrad hat. Vorteilhaft ist ferner das relativ geringe Gewicht von Stufengetrieben. Die über die beiden Getriebezweige fließenden Teil-Leistungen werden in einem Summiergetriebe wieder zusammengeführt.

Bei Fahrantrieben mit Leistungsverzweigungsgetrieben, wie sie in der genannten Druckschrift offenbart sind, beispielsweise hydraulisch-mechanischen Getriebeeinrichtungen mit einem hydrostatischen Variator, erfolgt das Anfahren in der Regel stufenlos (hydrostatisch). Bei höheren Fahrgeschwindigkeiten wird die Leistung überwiegend durch den mechanischen Zweig, also über das Stufengetriebe übertragen. In allen Betriebszuständen ist jedoch mindestens eines der zur stufenlosen Übersetzung notwendigen Hydrauliktriebwerke des Variators permanent in Rotation.

Daraus ergeben sich Leistungsverluste, nämlich einerseits mechanischer Art, z. B. durch schleifende Dichtungen, und andererseits hydraulischer Art durch unter Öl drehende Bauteile im Triebwerksgehäuse (sogenannte Planschverluste). Letztere fallen insbesondere bei höheren Drehzahlen verstärkt ins Gewicht.

Ein gattungsgemäßer Fahrantrieb, bei dem der Variator als hydrostatisches Getriebe ausgebildet ist, wird in der DE 10 2006 036 846 A1 beschrieben. Ein als elektrisches Getriebe ausgebildeter Variator ist Teil eines gattungsgemäßen Fahrantriebs, der in der US 2010/0120580 A1 beschrieben wird.

Das Schaltgetriebe weist bei dem gattungsgemäßen Fahrantrieb demnach zumindest eine erste und eine zweite Schaltstufe auf, wobei die erste Schaltstufe eingangsseitig mit dem Variator und die zweite Schaltstufe eingangsseitig direkt oder indirekt mit dem Antriebsmotor verbunden ist und wobei zwischen dem Antriebsmotor und dem Variator eine lösbare Kupplung angeordnet ist.

Beim Beschleunigen des mit dem Fahrantrieb ausgerüsteten Fahrzeugs kommen nacheinander zunächst der die erste Schaltstufe eines mechanischen Getriebeabschnitts antreibende Variator-Getriebeabschnitt und danach die zweite Schaltstufe des mechanischen Getriebeabschnitts zum Einsatz, die rein mechanisch mit dem Antriebsmotor verbunden ist. Im letztgenannten Betriebszustand ist es möglich, durch Öffnen der Kupplung den Variator vollständig aus dem Kraftfluss herauszunehmen, wodurch der Wirkungsgrad der Getriebeeinrichtung und damit des Fahrantriebs signifikant verbessert wird.

Somit wird die Leistung entweder über einen Getriebeabschnitt mit stufenloser Übersetzung (Variator plus nachgeschaltete Übersetzung der ersten Schaltstufe des Schaltgetriebes) oder einen Getriebeabschnitt mit mechanisch fester bzw. gestufter Übersetzung (zweite Schaltstufe des Schaltgetriebes plus ggf. eine weitere Übersetzungsstufe) übertragen. Die im jeweiligen Betriebszustand nicht im Kraftfluss angeordneten Komponenten der Getriebeeinrichtung erzeugen daher keine oder kaum Verlustleistung.

Der vorliegenden Erfindung liegt die Aufgabe zu Grunde, einen Fahrantrieb der eingangs genannten Art zur Verfügung zu stellen, der einen verbesserten Wirkungsgrad ermöglicht. Angestrebt werden ferner kompakte Abmessungen, ein einfacher konstruktiver Aufbau und ein weiter Einsatzbereich.

Diese Aufgabe wird erfindungsgemäß dadurch gelöst, dass ein im Schaltgetriebe zum Wechsel der ersten und der zweiten Schaltstufe verschiebbares und dadurch außer Eingriff mit der einen Schaltstufe und in Eingriff mit der anderen Schaltstufe bringbares Kraftübertragungselement in Wirkverbindung mit einer zur Verbindung der zwei Antriebsachsen vorgesehenen Kupplungseinrichtung steht. Durch die Kraftübertragungseinrichtung kann somit sowohl der Gangwechsel im Schaltgetriebe erfolgen als auch eine Verbindung zwischen zwei Antriebsachsen hergestellt oder gelöst werden. Die Anzahl der angetriebenen Achsen kann also an den Betriebszustand angepasst und somit Verlustleistung reduziert werden.

Zweckmäßigerweise wird der Variator auch zum Synchronisieren der Drehzahlen der ersten und der zweiten Schaltstufe des mechanischen Schaltgetriebes der Getriebeeinrichtung benutzt, um einen zugkraftunterbrechungsfreien Schaltvorgang zu ermöglichen. Es bedarf daher keiner gesonderten mechanischen Synchronisiereinrichtungen innerhalb des Schaltgetriebes.

In Weiterbildung der Erfindung wird vorgeschlagen, ein Zusatz-Schaltgetriebe, das eine Mehrzahl von Schaltstufen mit festem Übersetzungsverhältnis aufweist, der zweiten Schaltstufe des Schaltgetriebes vorzuschalten oder nachzuschalten. Dadurch kann der Übersetzungsbereich der Getriebeeinrichtung noch weiter gespreizt werden.

Ferner ist es zweckmäßig, wenn das Kraftübertragungselement als mit einer Innen-und einer Außenverzahnung versehene Hohlwelle ausgebildet ist, wobei die Außenverzahnung zum Eingriff mit den Schaltstufen des Schaltgetriebes und die Innenverzahnung zum Eingriff mit Verbindungswellen der Antriebsachsen vorgesehen ist.

Der stufenlose Zweig der Getriebeeinrichtung kann im Prinzip durch jede geeignete Art eines Variators gebildet werden, z. B. durch ein Umschlingungs- oder ein Wälzgetriebe. Gemäß einer bevorzugten Ausgestaltung der Erfindung ist der Variator als hydrostatisches Getriebe ausgebildet, das eine Axialkolbenpumpe und einen damit hydraulisch verbundenen Axialkolbenmotor aufweist.

Im Hinblick auf kompakte Abmessungen ist es ferner von Vorteil, wenn die Axialkolbenpumpe und der Axialkolbenmotor in Schrägscheibenbauweise ausgeführt, axial hintereinander angeordnet und jeweils mit einer hohlen Triebwerkswelle versehen sind, wobei eine den Antriebsmotor mit der zweiten Schaltstufe des Schaltgetriebes direkt oder indirekt verbindende Antriebswelle durch die Triebwerkswellen hindurchgeführt ist. Der Variator ist dabei äußerst kompakt und ermöglicht eine sogenannte back-to-back-Bauweise der beiden hydrostatischen Triebwerke. Hierbei sind die Axialkolbeneinheiten spiegelbildlich zueinander angeordnet und verfügen über eine gemeinsame Steuerbodenaufnahme, wodurch sich kurze hydraulische Verbindungen ergeben.

Gemäß einer anderen günstigen Ausgestaltung der Erfindung ist der Variator als elektrisches Getriebe ausgebildet, das zwei elektrische Maschinen aufweist.

Analog zu der bereits im Zusammenhang mit einem hydrostatischen Variator beschriebenen Bauweise ist auch hier möglich, dass die elektrischen Maschinen axial fluchtend hintereinander angeordnet und jeweils mit einer hohlen Maschinenwelle versehen sind, wobei eine den Antriebsmotor mit der zweiten Schaltstufe des Schaltgetriebes direkt oder indirekt verbindende Antriebswelle durch die Maschinenwellen hindurchgeführt ist.

Weitere Vorteile ergeben sich, wenn zumindest die dem Ausgang des Variators zugeordnete elektrische Maschine mit einem elektrischen Energiespeicher verbunden ist. Es ist dann möglich, den Fahrantrieb für ein Hybridfahrzeug einzusetzen. Der elektrische Energiespeicher, beispielsweise ein Akkumulator, kann durch Rekuperation geladen werden. Hierbei wird die ausgangsseitige elektrische Maschine zum Abbremsen der Fahrzeugs generatorisch betrieben, um Bewegungsenergie des Fahrzeugs in elektrische Energie umzuwandeln.

Sofern der elektrische Energiespeicher auch an die eingangsseitige elektrische Maschine angeschlossen ist, die als Starter-Generator betreibbar ist, kann auf einfache Weise ein kraftstoffsparender und emissionsverringernder Start-Stopp-Betrieb erzielt werden. Hierbei ist es möglich, den Antriebsmotor in Phasen des Stillstands des Fahrantriebs abzuschalten. Vor dem Weiterfahren wird dann durch die als Starter, also elektromotorisch betriebene, eingangsseitige elektrische Maschine, die dabei vom elektrischen Energiespeicher gespeist wird, der Antriebsmotor wieder angelassen.

Darüber hinaus kann beim Fahren im stufenlosen elektrischen Getriebezweig, bei dem die eingangsseitige elektrische Maschine als Generator Strom in die elektromotorisch betriebene, ausgangsseitige elektrische Maschine einspeist, zugleich auch der elektrische Energiespeicher geladen werden. Eine Befüllung des Speichers ist also auch ohne Rekuperation möglich.

Selbstverständlich ist es auch bei Verwendung eines hydrostatischen Variators möglich, im Bremsbetrieb mittels eines hydraulischen Speichers und eines geeigneten Speicherladeventils Energie zurückzugewinnen und darüber hinaus einen Start-Stopp-Betrieb mittels Speicher und motorisch betriebener Pumpe zu erzielen.
Weitere Vorteile und Einzelheiten der Erfindung werden anhand der in den schematischen Figuren dargestellten Ausführungsbeispiele näher erläutert. Dabei zeigt
- Figur 1: eine Prinzipdarstellung eines Fahrantriebs mit einem hydrostatischen Variator in Kompaktbauweise,
- Figur 2: eine Variante des Fahrantriebs mit einem hydrostatischen Variator in aufgelöster Bauweise,
- Figur 3: zwei Fahrantriebsvarianten mit vor- und nachgeschaltetem Zusatz-Schaltgetriebe,
- Figur 4: ein Zugkraftdiagramm der in Figur 3 oben dargestellten Fahrantriebsvariante,
- Figur 5: einen erfindungsgemäßen Fahrantrieb mit einem in Wirkverbindung mit dem Schaltgetriebe und zwei Antriebsachsen stehenden Kraftübertragungselement in verschiedenen Schaltzuständen,
- Figur 6: einen Fahrantrieb mit elektrischem Getriebe als Variator in KompaktBauweise und
- Figur 7: eine Variante des Fahrantriebs mit einem hydrostatischen Variator und Lamellenkupplungen im Schaltgetriebe.

Der Fahrantrieb weist einen Antriebsmotor VKM auf, der über eine Getriebeeinrichtung G mit einer ersten Antriebsachse A1 und einer zweiten Antriebsachse A2 verbunden ist. Beide Antriebsachsen A1, A2 sind als Differentialachsen ausgeführt und weisen daher jeweils ein Differentialgetriebe D1 bzw. D2 auf. Zwischen den Antriebsachsen A1, A2 befindet sich eine lösbare Kupplung K2, die mittels Verbindungswellen WA1, WA2 an die Differentialgetriebe D1, D2 angeschlossen ist. Bei gelöster, d.h. offener Kupplung K2 kann lediglich die erste Antriebsachse A1 angetrieben werden. Bei geschlossener Kupplung K2 sind beide Antriebsachsen A1 und A2 antreibbar. Es versteht sich, dass auch zwischen den Antriebsachsen A1, A2 ein Differentialgetriebe angeordnet sein kann, um Verspannungen im Antriebsstrang zu vermeiden.

Die Getriebeeinrichtung G umfasst einen Variator V, also ein Teilgetriebe mit stufenloser Übersetzung, und ein als Synchronschaltgetriebe ausgebildetes Schaltgetriebe S, das im vorliegenden Ausführungsbeispiel über eine erste Schaltstufe ST1 und eine zweite Schaltstufe ST2 verfügt. Der Variator V besteht aus einem hydrostatischen Getriebe, das eine Axialkolbenpumpe P und einen damit im geschlossenen Kreis hydraulisch verbundenen Axialkolbenmotor M aufweist.

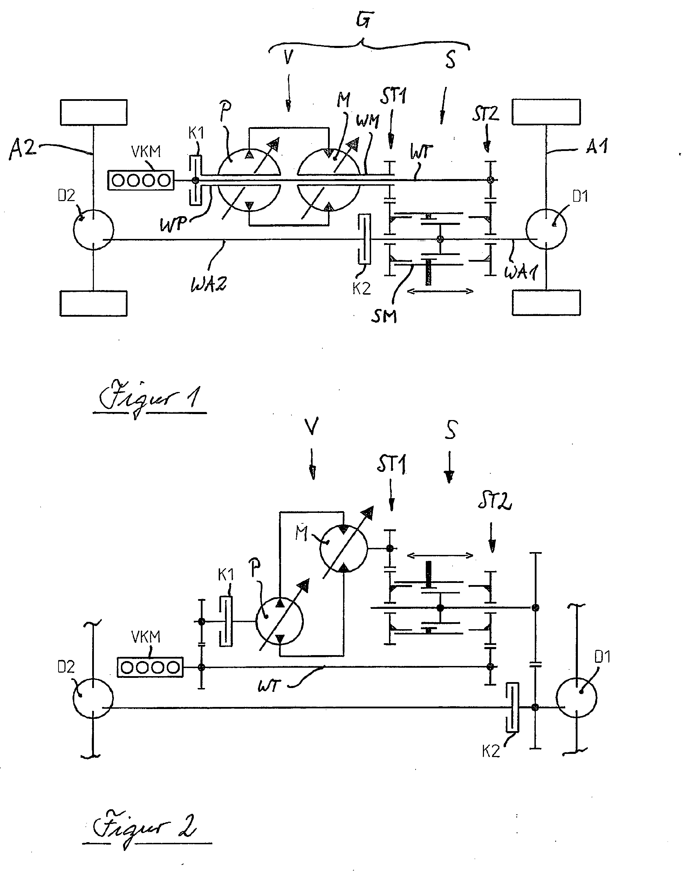

Sowohl die Axialkolbenpumpe P als auch der Axialkolbenmotor M sind bevorzugt in Schrägscheibenbauweise ausgeführt. Dadurch ist eine Bauanordnung möglich, wie sie in Figur 1 im Prinzip angedeutet ist: Der Axialkolbenmotor M ist koaxial fluchtend zur Axialkolbenpumpe P angeordnet, idealerweise in sogenannter back-to-back-Bauweise, bei der die beiden Triebwerke zueinander spiegelbildlich sind und sich eine gemeinsame Steuerbodenaufnahme axial zwischen den Triebwerken befindet, woraus kurze hydraulische Verbindungswege resultieren. Es ergibt sich dabei ein Variator in Kompaktbauweise.

Der Axialkolbenmotor M ist mit dem Eingang der ersten Schaltstufe ST1 des Schaltgetriebes S verbunden. Hierbei treibt eine Triebwerkswelle WM des Axialkolbenmotors M ein eingangsseitiges Zahnrad der ersten Schaltstufe ST1 an. Eine Triebwerkswelle WP der Axialkolbenpumpe P des hydrostatischen Variators V ist durch den Antriebsmotor VKM antreibbar, vorausgesetzt, eine zwischen dem Antriebsmotor VKM und der Axialkolbenpumpe P angeordnete, lösbare Kupplung K1 ist geschlossen. Der Variator V ist somit der ersten Schaltstufe ST1 des Schaltgetriebes S zugeordnet und vorgeschaltet.

Die beiden Triebwerkswellen WP, WM der Axialkolbenpumpe P und des Axialkolbenmotors M fluchten zueinander und sind hohl ausgebildet. Eine mit dem Antriebsmotor VKM verbundene Antriebswelle WT ist durch die hohlen Triebwerkswellen WP, WM hindurch geführt. An dem zum Antriebsmotor VKM entgegengesetzten Ende der Antriebswelle WT ist diese mit dem Eingang der zweiten Schaltstufe ST2 verbunden, d.h. sie treibt das eingangsseitige Zahnrad der zweiten Schaltstufe ST2. Mittels einer als verschiebbare Schaltmuffe SM ausgebildeten Kraftübertragungseinrichtung im Schaltgetriebe S kann zwischen den beiden Schaltstufen ST1, ST2 hin- und hergeschaltet werden.

Befindet sich die Schaltmuffe SM in Eingriff mit der ersten Schaltstufe ST1 und ist die Kupplung K1 geschlossen, dann ist der Variator V in den Kraftfluss zwischen den Antriebsmotor VKM und die Antriebsachse A1 geschaltet. Die vom Antriebsmotor VKM zur Verfügung gestellte Leistung wird stufenlos hydrostatisch über den Variator V und die erste Schaltstufe ST1 des Schaltgetriebes S zur Antriebsachse A1 übertragen. Bei geschlossener Kupplung K2 fließt auch zur Antriebsachse A2 Leistung. Dieser Betriebszustand wird für relativ niedrige Geschwindigkeiten genutzt, bei denen aus dem Stillstand heraus angefahren wird. Da die Axialkolbenpumpe P reversierbar ausgebildet ist, kann der Fahrantrieb dabei in beide Fahrtrichtungen betrieben werden, ohne ein separates Wendegetriebe zu benötigen.

Durch die stufenlose Übersetzung im Variator V ist es möglich, den Antriebsmotor VKM im optimalen Betriebspunkt arbeiten zu lassen und dadurch den bestmöglichen Wirkungsgrad zu erzielen. Der durch die zweite Schaltstufe ST2 des Schaltgetriebes S repräsentierte rein mechanische Zweig der Getriebeeinrichtung G des Fahrantriebs ist dabei nicht im leistungsübertragenden Eingriff.

Nach dem Erreichen einer bestimmten Fahrgeschwindigkeit und dem durch den Variator V bewirkten Angleichen der Ausgangsdrehzahlen der Schaltstufen ST1 und ST2 wird durch axiales Verschieben der Schaltmuffe SM im Schaltgetriebe S die zweite Schaltstufe ST2 in Eingriff und die erste Schaltstufe ST1 außer Eingriff gebracht. Der Schaltvorgang erfolgt synchronisiert und ohne Unterbrechung der Zugkraft. Die zwischen den Antriebsmotor VKM und die Axialkolbenpumpe P des Variators V geschaltete Kupplung K1 wird nach Beendigung des Schaltvorgangs geöffnet und somit der Variator V der Getriebeeinrichtung G vollständig aus dem Kraftfluss herausgenommen. Die Leistung fließt daher direkt vom Antriebsmotor VKM über die Triebwelle WT zur zweiten Schaltstufe ST2 des Schaltgetriebes S und von dort zur Antriebsachse A1 sowie ggf. auch zur Antriebsachse A2. Die Leistungsübertragung erfolgt somit rein mechanisch. Dieser Betriebszustand wird für höhere Fahrgeschwindigkeiten genutzt.

Der in Figur 2 dargestellte Fahrantrieb unterscheidet sich vom Fahrantrieb der Figur 1 dadurch, dass eine sogenannte aufgelöste Bauweise vorgesehen ist. Hierbei sind die Axialkolbenpumpe P und der Axialkolbenmotor M des Variators V nicht in back-to-back-Bauweise als raumsparender Kompaktvariator ausgeführt, sondern können bei gleicher Funktionalität räumlich voneinander getrennt sein. Die hydraulische Verbindung erfolgt über Schlauch- oder Rohrleitungen.

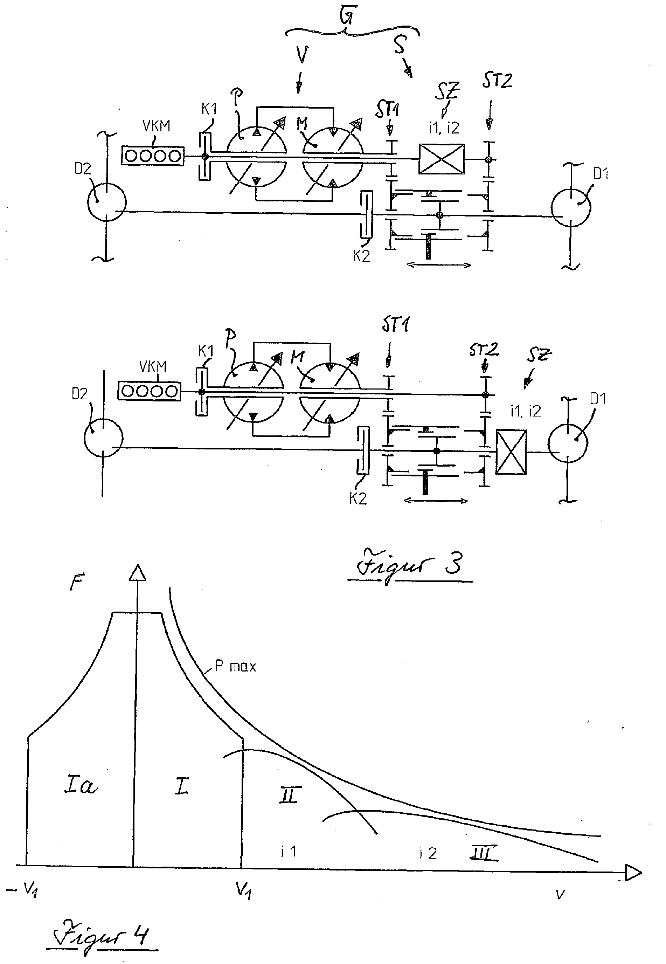

Ein weiterer Fahrantrieb ist in Figur 3 dargestellt. Hierbei ist ein Zusatz-Schaltgetriebe SZ, das bevorzugt ebenfalls als Synchron-Schaltgetriebe ausgebildet ist und im vorliegenden Ausführungsbeispiel zwei Übersetzungsstufen i1, i2 ermöglicht, dem Eingang der zweiten Schaltstufe ST2 vorgeschaltet (Figur 3 oben) oder dem Ausgang der zweiten Schaltstufe ST2 nachgeschaltet (Figur 3 unten). Dadurch wird der Gesamt-Übersetzungsbereich der Getriebeeinrichtung G erweitert.

In Figur 4 ist die Wandlung des Antriebsmoments des Antriebsmotors VKM für die in Figur 3 oben dargestellte Anordnung aufgezeigt, bei der die zweite Schaltstufe ST2 dem Zusatz-Schaltgetriebe SZ nachgeordnet ist. Im Diagramm ist die Zugkraft F des Fahrantriebs über der Fahrgeschwindigkeit v aufgetragen. In den Geschwindigkeitsbereichen I und Ia des Diagramms ist der Variator V wirksam und es ist eine stufenlose, zugkraftunterbrechungsfreie Übersetzungsänderung in Vorwärts- und Rückwärtsfahrtrichtung zwischen den beiden Geschwindigkeiten -V₁ und +V₁ möglich. In Vorwärtsfahrtrichtung (im Diagramm nach rechts) schließen nach dem Umschalten in die zweite Schaltstufe ST2 des Schaltgetriebes S ein Bereich II an, in dem die Übersetzungsstufe i1 des Zusatz-Schaltgetriebes SZ wirksam ist, und ein Bereich III, in dem sich die Übersetzungsstufe i2 des Zusatz-Schaltgetriebes SZ im Eingriff befindet. In beiden Bereichen II, III ist es möglich, nur die Antriebsachse A1 oder bei geschlossener Kupplung K2 zusätzlich auch die Antriebsachse A2 anzutreiben. Die maximal mögliche Leistung Pmax ist als Leistungshyperbel eingezeichnet.

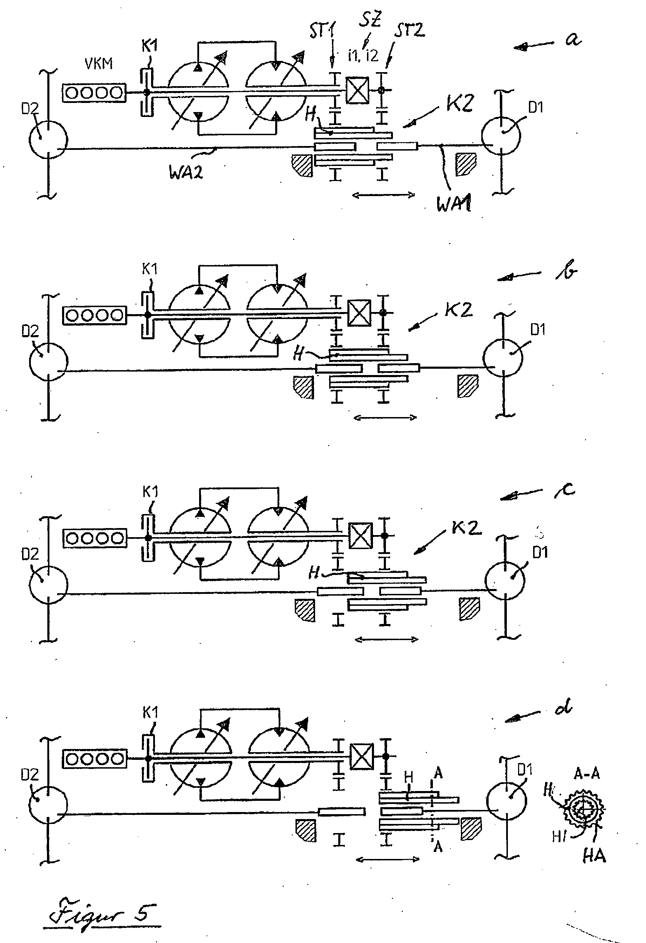

Figur 5 zeigt den erfindungsgemäßen Fahrantrieb, bei dem das Kraftübertragungselement in Wirkverbindung mit der Kupplung K2 steht. Hierbei ist das Kraftübertragungselement als mit einer Innenverzahnung HI und mit einer Außenverzahnung HA versehene Hohlwelle H ausgebildet (siehe Schnitt A-A zur untersten Darstellung d in Figur 5). Es können beispielsweise Keil- oder Kerbverzahnungen zum Einsatz kommen. Die Außenverzahnung HA ist zum Eingriff mit den Schaltstufen ST1, ST2 des Schaltgetriebes S vorgesehen und die Innenverzahnung HI zum Eingriff mit Verbindungswellen WA1, WA2 der Antriebsachsen A1, A2.

Dargestellt sind vier Schaltzustände a, b, c und d: Die in der Figur oberste Darstellung a zeigt die Getriebeeinrichtung G in einer Einstellung, in der bei ganz nach links verschobener Hohlwelle H die erste Schaltstufe ST1 des Schaltgetriebes S wirksam und zugleich die Kupplung K2 geschlossen ist. Demnach treibt der Antriebsmotor VKM (bei geschlossener Kupplung K1) über den Variator V und die erste Schaltstufe ST1 des Schaltgetriebes S beide Antriebsachsen A1, A2 an.

Bei Erreichen der Synchrondrehzahl kann das als Hohlwelle H ausgebildete Kraftübertragungselement axial nach rechts verschoben werden, wodurch die zweite Schaltstufe ST2 in Eingriff kommt (Darstellung b; das Zusatz-Schaltgetriebe SZ befindet sich in der Übersetzungsstufe i1).

Bei einer weiteren axialen Verschiebung (Darstellung c) der Hohlwelle H nach rechts ist die erste Schaltstufe ST1 außer Eingriff gekommen. Die Kupplung K1 kann geöffnet und dadurch der Variator V vollkommen aus dem Kraftfluss abgetrennt werden. Die beiden Antriebsachsen A1 und A2 sind nach wie vor miteinander verbunden.

Wird die Hohlwelle H noch weiter axial nach rechts verschoben, dann werden die Verbindungswellen WA1 und WA2 voneinander getrennt und es wird lediglich noch die Antriebsachse A1 durch den Antriebsmotor VKM angetrieben (Darstellung d).

Die als Hohlwelle H ausgebildete Kraftübertragungseinrichtung ermöglicht also nicht nur das Umschalten zwischen den beiden Schaltstufen ST1 und ST2 des Schaltgetriebes S sondern ein Umschalten zwischen Einachs- und Zweiachs-Betrieb entsprechend einem Zweirad- bzw. Vierrad-Betrieb eines mit dem erfindungsgemäßen Fahrantrieb ausgestatteten Fahrzeugs. Eine Einrichtung zum Synchronisieren der Drehzahlen der Verbindungswellen WA1, WA2 der Antriebsachsen A1, A2 ist nicht dargestellt.

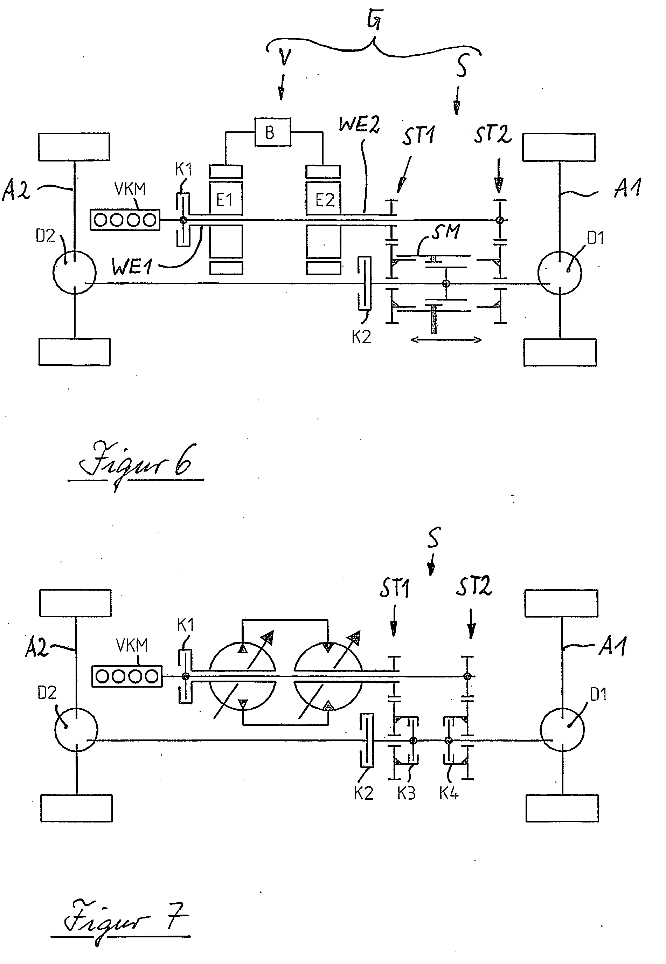

Figur 6 zeigt einen Fahrantrieb, bei dem an Stelle eines hydrostatischen Getriebes ein elektrisches Getriebe als Variator V zum Einsatz kommt. Hierbei sind zwei elektrische Maschinen E1, E2 vorgesehen, die bevorzugt axial fluchtend hintereinander angeordnet sind und analog zu der bereits im Zusammenhang mit einem hydrostatischen Variator V beschriebenen Bauweise jeweils mit einer hohlen Maschinenwelle WE1 bzw. WE2 versehen sind, so dass die den Antriebsmotor VKM mit dem Eingang der zweiten Schaltstufe ST2 des Schaltgetriebes S verbindende Antriebswelle WT durch die zueinander fluchtenden Maschinenwellen EW1, EW2 hindurchgeführt werden kann.

Darüber hinaus sind beide elektrische Maschinen E1, E2 mit einem elektrischen Energiespeicher B verbunden ist, beispielsweise einem Akkumulator. Dadurch ist es möglich, die ausgangsseitige elektrische Maschine E2 zum Abbremsen des Fahrzeugs generatorisch zu betreiben, um den Energiespeicher B durch Rekuperation zu füllen. Es wird dabei in der Bremsphase Bewegungsenergie des Fahrzeugs in elektrische Energie umgewandelt, um bei einem späteren Beschleunigungsvorgang wieder genutzt zu werden.

Ferner ermöglicht es der Energiespeicher B, dass die eingangsseitige elektrische Maschine E1 als Starter-Generator betrieben werden kann. Dadurch ist auf einfache Weise ein kraftstoffsparender und emissionsverringernder Start-Stopp-Betrieb erzielbar, bei dem der Antriebsmotor VKM in Phasen des Stillstands des Fahrantriebs abgeschaltet wird. Zum Weiterfahren wird dann durch die als Starter betriebene, eingangsseitige elektrische Maschine E1, die vom elektrischen Energiespeicher B gespeist wird, der Antriebsmotor VKM wieder angelassen.

Grundsätzlich ist eine Rekuperationsfunktion ebenso wie eine Start-Stopp-Funktion auch in der Ausführung mit hydrostatischem Variator möglich, wobei dann ein entsprechender hydropneumatischer Energiespeicher und ein mit entsprechender Logik ausgestattetes Speicherladeventil erforderlich sind.

Der in Figur 7 dargestellte Fahrantrieb entspricht im Grundaufbau dem in Figur 1 dargestellten Fahrantrieb. Anstelle einer verschiebbaren Schaltmuffe SM im Schaltgetriebe S, mit der zwischen den beiden Schaltstufen ST1, ST2 hin- und hergeschaltet werden kann und dadurch jeweils eine formschlüssige Kraftübertragung hergestellt wird, sind zwei Lamellenkupplungen K3, K4 vorgesehen, die wechselweise geschlossen bzw. geöffnet werden, um eine reibschlüssige Kraftübertragung zu erzielen. Auch hier erfolgt der Schaltvorgang bevorzugt synchronisiert. Bei entsprechender Auslegung der Kupplungen K3, K4 ist es jedoch möglich, dass die durch den Variator V erzeugte Synchronisiergenauigkeit etwas geringer sein kann als bei Fig. 1, da etwaige geringfügige Drehzahldifferenzen beim Schließen der Kupplung K3 bzw. K4 durch kurzzeitige Reibvorgänge ausgeglichen werden können.

## Patentansprüche

1. Fahrantrieb mit einem Antriebsmotor (VKM) und einer Getriebeeinrichtung (G), die ein Schaltgetriebe (S) mit einer Mehrzahl von Schaltstufen (ST1, ST2) mit jeweils festem Übersetzungsverhältnis und einen Variator (V) mit stufenlos variablem Übersetzungsverhältnis umfasst, wobei der Variator (V) und eine zwischen dem Antriebsmotor (VKM) und dem Variator (V) angeordnete, lösbare Kupplung (K1) einer ersten Schaltstufe (ST1) des Schaltgetriebes (S) vorgeschaltet sind und eine zweite Schaltstufe (ST2) des Schaltgetriebes (S) eingangsseitig direkt oder unter Zwischenschaltung mindestens einer weiteren Übersetzungsstufe mit dem Antriebsmotor (VKM) verbunden ist, **dadurch gekennzeichnet, dass** der Fahrantrieb zwei durch die Getriebeeinrichtung (G) antreibbare Antriebsachsen (A1, A2) aufweist, und dass ein im Schaltgetriebe (S) zum Wechsel der ersten und zweiten Schaltstufe (ST1, ST2) verschiebbares und dadurch außer Eingriff mit der einen Schaltstufe (ST1 bzw. ST2) und in Eingriff mit der anderen Schaltstufe (ST2 bzw. ST1) bringbares Kraftübertragungselement in Wirkverbindung mit einer zur Verbindung der zwei Antriebsachsen (A1, A2) vorgesehenen Kupplungseinrichtung (K2) steht.

2. Fahrantrieb nach Anspruch 1, **dadurch gekennzeichnet, dass** ein Zusatz-Schaltgetriebe (SZ), das eine Mehrzahl von Schaltstufen mit festem Übersetzungsverhältnis (i1, i2) aufweist, der zweiten Schaltstufe (ST2) des Schaltgetriebes (S) vorgeschaltet oder nachgeschaltet ist.

3. Fahrantrieb nach Anspruch 1 oder 2, **dadurch gekennzeichnet, dass** das Kraftübertragungselement als mit einer Innen- und einer Außenverzahnung (HI bzw. HA) versehene Hohlwelle (H) ausgebildet ist, wobei die Außenverzahnung (HA) zum Eingriff mit den Schaltstufen (ST1, ST2) des Schaltgetriebes (S) und die Innenverzahnung (HI) zum Eingriff mit Verbindungswellen (WA1, WA2) der Antriebsachsen (A1, A2) vorgesehen ist.

4. Fahrantrieb nach einem der Ansprüche 1 bis 3, **dadurch gekennzeichnet, dass** der Variator (V) als hydrostatisches Getriebe ausgebildet ist, das eine Axialkolbenpumpe (P) und einen damit hydraulisch verbundenen Axialkolbenmotor (M) aufweist.

5. Fahrantrieb nach Anspruch 4, **dadurch gekennzeichnet, dass** die Axialkolbenpumpe (P) und der Axialkolbenmotor (M) in Schrägscheibenbauweise ausgeführt, axial hintereinander angeordnet und jeweils mit einer hohlen Triebwerkswelle (WP bzw. WM) versehen sind, wobei eine den Antriebsmotor (VKM) mit der zweiten Schaltstufe (ST2) des Schaltgetriebes (S) direkt oder indirekt verbindende Antriebswelle (WT) durch die Triebwerkswellen (WP, WM) hindurchgeführt ist.

6. Fahrantrieb nach einem der Ansprüche 1 bis 3, **dadurch gekennzeichnet, dass** der Variator (V) als elektrisches Getriebe ausgebildet ist, das zwei elektrische Maschinen (E1, E2) aufweist.

7. Fahrantrieb nach Anspruch 6, **dadurch gekennzeichnet, dass** die elektrischen Maschinen (E1, E2) axial fluchtend hintereinander angeordnet und jeweils mit einer hohlen Maschinenwelle (WE1 bzw. WE2) versehen sind, wobei eine den Antriebsmotor (VKM) mit der zweiten Schaltstufe (ST2) des Schaltgetriebes (S) direkt oder indirekt verbindende Antriebswelle (WT) durch die Maschinenwellen (WE1, WE2) hindurchgeführt ist.

8. Fahrantrieb nach Anspruch 6 oder 7, **dadurch gekennzeichnet, dass** zumindest die dem Ausgang des Variators (V) zugeordnete elektrischen Maschine (E2) mit einem elektrischen Energiespeicher (B) verbunden ist.

9. Fahrantrieb nach Anspruch 8, **dadurch gekennzeichnet, dass** der elektrische Energiespeicher (B) auch an die eingangsseitige elektrische Maschine (E1) angeschlossen ist, die als Starter-Generator betreibbar ist.

## Claims

1. Traction drive with an engine (VKM) and with a transmission arrangement (G) which comprises a gear-shift transmission (S) with a plurality of shift steps (ST1, ST2), each with a fixed step-up ratio, and comprises a variable speed gear (V) with a continuously variable step-up ratio, the variable speed gear (V) and a releaseable clutch (K1) arranged between the engine (VKM) and variable speed gear (V) preceding a first shift step (ST1) of the gear-shift transmission (S), and a second shift step (ST2) of the gear-shift transmission (S) being connected on the input side to the engine (VKM) directly or with at least one further step-up step being interposed, **characterized in that** the traction drive has two drive axles (A1, A2) driveable by means of the transmission arrangement (G), a force transfer element displaceable in the gear-shift transmission (S) for changing the first and the second shift step (ST1, ST2) and thereby capable of being brought out of engagement with one shift step (ST1 or ST2) and into engagement with the other shift step (ST2 or ST1) is operatively connected to a clutch device (K2) provided for connecting the two drive axles (A1, A2).

2. Traction drive according to Claim 1, **characterized in that** an additional gear-shift transmission
(SZ), which has a plurality of shift steps with a fixed step-up ratio (i1, i2), precedes or follows the second shift step (ST2) of the gear-shift transmission (S).

3. Traction drive according to Claim 1 or 2, **characterized in that** the force transfer element is designed as a hollow shaft (H) provided with an internal and an external toothing (HI and HA), the external toothing (HA) being provided for engagement with the shift steps (ST1, ST2) of the gear-shift transmission (S), and the internal toothing (HI) being provided for engagement with connecting shafts (WA1, WA2) of the drive axles (A1, A2).

4. Traction drive according to one of Claims 1 to 3, **characterized in that** the variable speed gear (V) is designed as a hydrostatic gear which has an axial piston pump (P) and an axial piston motor (M) connected hydraulically thereto.

5. Traction drive according to Claim 4, **characterized in that** the axial piston pump (P) and the axial piston motor (M) are of the swashplate type of construction, are arranged axially one behind the other and are provided in each case with a hollow drivetrain shaft (WP or WM), a drive shaft (WT) which directly or indirectly connects the engine (VKM) to the second shift step (ST2) of the gear-shift transmission (S) being led through the drivetrain shafts (WP, WM).

6. Traction drive according to one of Claims 1 to 3, **characterized in that** the variable speed gear (V) is designed as electric gear which has two electric machines (E1, E2).

7. Traction drive according to Claim 6, **characterized in that** the electric machines (E1, E2) are arranged axially in alignment one behind the other and are provided in each case with a hollow machine shaft (WE1 and WE2), a drive shaft (WT) which directly or indirectly connects the engine (VKM) to the second shift step (ST2) of the gear-shift transmission (S) being led through the machine shafts (WE1, WE2).

8. Traction drive according to Claim 6 or 7, **characterized in that** at least the electric machine (E2) assigned to the output of the variable speed gear (V) is connected to an electrical energy accumulator (B).

9. Traction drive according to Claim 8, **characterized in that** the electrical energy accumulator (B) is also connected to the input-side electric machine (E1) which can be operated as a starter generator.

## Revendications

1. Entraînement de conduite comprenant un moteur d'entraînement (VKM) et un dispositif de transmission (G), qui comprend une boîte de vitesses (S) avec une pluralité de rapports de changement de vitesses (ST1, ST2), comprenant chacun un rapport de transmission fixe et un variateur (V) avec un rapport de transmission à variation continue, le variateur (V) et un embrayage (K1) desserrable, disposé entre le moteur d'entraînement (VKM) et le variateur (V), étant montés en amont d'un premier rapport de changement de vitesses (ST1) de la boîte de vitesses (S) et un deuxième rapport de changement de vitesses (ST2) de la boîte de vitesses (S) étant connecté du côté de l'entrée directement ou en interposant au moins un étage de transmission supplémentaire au moteur d'entraînement (VKM), **caractérisé en ce que** l'entraînement de conduite présente deux essieux moteurs (A1, A2) pouvant être entraînés par le dispositif de transmission (G), et **en ce qu'**un élément de transfert de force pouvant être déplacé dans la boîte de vitesses (S) pour changer le premier et le deuxième rapport de changement de vitesses (ST1, ST2) et de ce fait pouvant être amené hors d'engagement avec l'un des rapports de changement de vitesses (ST1 ou ST2) et en prise avec l'autre rapport de changement de vitesses (ST2 ou ST1) est en liaison fonctionnelle avec un dispositif d'embrayage (K2) prévu pour la connexion des deux essieux moteurs (A1, A2).

2. Entraînement de conduite selon la revendication 1, **caractérisé en ce qu'**une boîte de vitesses auxiliaire (SZ) qui présente une pluralité de rapports de changement de vitesses avec un rapport de transmission fixe (i1, i2) est montée en amont ou en aval du deuxième rapport de changement de vitesses (ST2) de la boîte de vitesses (S).

3. Entraînement de conduite selon la revendication 1 ou 2, **caractérisé en ce que** l'élément de transfert de force est réalisé sous forme d'arbre creux (H) pourvu d'une denture interne et d'une denture externe (HI, respectivement HA), la denture externe (HA) étant prévue pour l'engagement avec les rapports de changement de vitesses (ST1, ST2) de la boîte de vitesses (S) et la denture interne (HI) étant prévue pour l'engagement avec les arbres de liaison (WA1, WA2) des essieux moteurs (A1, A2).

4. Entraînement de conduite selon l'une quelconque des revendications 1 à 3, **caractérisé en ce que** le variateur (V) est réalisé sous forme de transmission hydrostatique qui présente une pompe à piston axial (P) et un moteur à piston axial (M) connecté hydrauliquement à celle-ci.

5. Entraînement de conduite selon la revendication 4, **caractérisé en ce que** la pompe à piston axial (P) et le moteur à piston axial (M) sont réalisés suivant une construction à disques obliques, sont disposés l'un derrière l'autre axialement et sont pourvus chacun d'un arbre moteur creux (WP, respectivement WM), un arbre d'entraînement (WT) reliant directement ou indirectement le moteur d'entraînement (VKM) au deuxième rapport de changement de vitesses (ST2) de la boîte de vitesses (S) étant guidé à travers les arbres moteurs (WP, WM).

6. Entraînement de conduite selon l'une quelconque des revendications 1 à 3, **caractérisé en ce que** le variateur (V) est réalisé sous forme de transmission électrique qui présente deux machines électriques (E1, E2).

7. Entraînement de conduite selon la revendication 6, **caractérisé en ce que** les machines électriques (E1, E2) sont disposées l'une derrière l'autre en alignement axial et sont chacune pourvues d'un arbre de machines creux (WE1, respectivement WE2), un arbre d'entraînement (WT) reliant directement ou indirectement le moteur d'entraînement (VKM) au deuxième rapport de changement de vitesses (ST2) de la boîte de vitesses (S) étant guidé à travers les arbres de machines (WE1, WE2).

8. Entraînement de conduite selon la revendication 6 ou 7, **caractérisé en ce qu'**au moins la machine électrique (E2) associée à la sortie du variateur (V) est connectée à un accumulateur d'énergie électrique (B).

9. Entraînement de conduite selon la revendication 8, **caractérisé en ce que** l'accumulateur d'énergie électrique (B) est également raccordé à la machine électrique (E1) du côté de l'entrée, laquelle peut fonctionner en tant qu'alterno-démarreur.
